# EUROPÄISCHE PATENTANMELDUNG

(11) **EP 1 270 341 A2**
(43) Veröffentlichungstag der Anmeldung: **02.01.2003**
(21) Anmeldenummer: 02012414.5
(22) Anmeldetag: 07.06.2002
(51) Int. Cl.: B60R 21/20, B60K 37/00, B60R 21/26

(54) **Baugruppe bestehend aus Fahrzeugkarosserie, Frontscheibe, Instrumententafel und Gassackmodul**

(30) Priorität: 28.06.2001 DE 10131120
(71) Anmelder: TRW Occupant Restraint Systems GmbH & Co. KG, 73553 Alfdorf (DE)
(72) Erfinder: Debler, Jens, 73525 Herlikofen (DE); Schultz, Dirk, 73540 Heubach (DE); Lutz, Joachim, 73579 Schechingen (DE)
(74) Vertreter: Sties, Jochen, Dipl.-Ing.

(57) **Zusammenfassung**

Die Erfindung betrifft eine Baugruppe bestehend aus einer Fahrzeugkarosserie (10; 110), einer Frontscheibe (12; 112), einer Instrumententafel (14; 114) mit einem Lüftungskanal (34; 134) zum Belüften der Frontscheibe und einem Gassackmodul (16; 16'; 116). Das Gassackmodul (16; 16'; 116) ist zwischen der Frontscheibe (12; 112) und dem Lüftungskanal (34; 134) angeordnet, damit es sich möglichst weit außerhalb des Eingriffsbereichs des Fahrzeuginsassen befindet.

## Beschreibung

Die Erfindung betrifft eine Baugruppe bestehend aus einer Fahrzeugkarosserie, einer Frontscheibe, einer Instrumententafel mit einem Lüftungskanal zum Belüften der Frontscheibe und einem Gassackmodul.

Gassäcke sollen einen Fahrzeuginsassen vor einem unsanften Kontakt mit der Fahrzeugstruktur bewahren, indem sie seine kinetische Energie aufnehmen und im wesentlichen den Kopf effektiv abbremsen. Diese Forderung ist insbesondere dann nicht leicht zu erfüllen, wenn sich der Fahrzeuginsasse nicht in einer optimalen Sitzposition befindet, d.h. wenn er den Oberkörper vornüber oder zur Seite beugt. In solchen Fällen muß sich der Gassack möglichst weit vom Insassen entfernt auf einer breiten Front entfalten, um den Insassen in verschieden Positionen abfangen zu können. Dies wird im Stand der Technik durch ein langgestrecktes Gassackmodul erreicht, das sich parallel zur Vorderkante der Instrumententafel erstreckt, wie es beispielsweise in der DE 23 38 025 beschrieben ist. Darüberhinaus sind aber auch Beeinträchtigungen des Fahrzeuginsassen durch die Öffnungsmechanismen des Gassackmoduls, beispielsweise sich öffnende Klappen oder aufspringende Abdeckungen, auszuschließen.

Aufgabe der Erfindung ist es daher, eine Baugruppe der eingangs genannten Art zu schaffen, bei der sich das Gassackmodul außerhalb des Eingriffsbereichs des Fahrzeuginsassen befindet.

Zu diesem Zweck ist bei einer Baugruppe der eingangs genannten Art vorgesehen, daß das Gassackmodul zwischen der Frontscheibe und dem Lüftungskanal angeordnet ist. Damit ergibt sich ein maximal möglicher Abstand zwischen Gassackmodul und Fahrzeuginsasse, selbst wenn sich dieser nicht in einer optimalen Sitzposition befindet. Der Öffnungsmechanismus des Gassackmoduls, beispielsweise eine aufzureißende Abdeckklappe, kann somit außerhalb des Eingriffsbereichs des Fahrzeuginsassen angeordnet sein. Außerdem ermöglicht die Anordnung des Gassackmoduls im vom Fahrzeuginsassen aus gesehen hinteren Bereich der Instrumententafel eine größere gestalterische Freiheit für den vorderen, dem Fahrzeuginsassen zugewandten Bereich der Instrumententafel. Es ist damit möglich, diesen für das Fahrzeuginnendesign sensiblen Bereich dem Gesamtfahrzeugkonzept anzupassen, ohne daß auf funktionale Anforderungen Rücksicht genommen werden müßte.

Gemäß einer bevorzugten Ausführungsform der Erfindung ist vorgesehen, daß das Gassackmodul einen Gassack aufweist der zu einem Gassackpaket gefaltet ist, daß ein Schußkanal zum Ausstoßen des Gassackes vorgesehen ist, der in eine Ausstoßöffnung mündet, durch die der Gassack ausgestoßen werden kann, und daß das Gassackmodul ein Gehäuse aufweist, wobei der Schußkanal begrenzt ist von einer ersten Schußkanalwand, die von dem Gehäuse gebildet ist, und von einer zweiten Schußkanalwand, die von der Fahrzeugkarosserie gebildet ist. Das Gehäuse muß daher nur eine Schußkanalwand aufweisen, so daß es wesentlich vereinfacht werden kann, was zu einer relevanten Gewichts- und Materialeinsparung führt.

Weitere vorteilhafte Ausgestaltungen der Erfindung ergeben sich aus den Unteransprüchen.

Die Erfindung wird nachfolgend anhand bevorzugter Ausführungsformen ausführlich beschrieben. Dabei wird Bezug genommen auf die beigefügten Zeichnungen, in denen zeigt:
- Figur 1 einen Querschnitt durch eine Baugruppe gemäß einer ersten Ausführungsform der Erfindung;
- Figur 2 eine vergrößerte Darstellung des Bereichs II aus Figur 1;
- Figur 3 eine teilweise geschnittene Ansicht einer ersten Bauform eines Gassackmoduls für eine erfindungsgemäße Baugruppe;
- die Figuren 3a bis 3e Details des Gassackmoduls gemäß Figur 3;
- Figur 4 eine teilweise geschnittene Ansicht einer zweiten Bauform eines Gassackmoduls für eine erfindungsgemäße Baugruppe;
- Figur 5 einen Querschnitt durch eine Baugruppe gemäß einer zweiten Ausführungsform der Erfindung;
- Figur 6 eine Ansicht von Scheibenhalter, Gassackmodul und Lüftungskanal für eine Baugruppe gemäß einer dritten Ausführungsform der Erfindung;
- Figur 7 eine Ansicht von Scheibenhalter, Frontscheibe, Gassackmodul und Lüftungskanal für eine Baugruppe gemäß einer vierten Ausführungsform der Erfindung aus einer ersten Perspektive;
- Figur 8 eine Ansicht der Komponenten aus Figur 7 aus einer zweiten Perspektive;
- Figur 9 eine Ansicht des Gassackmoduls aus Figur 7 aus einer dritten Perspektive;
- Figur 10 eine schematische Ansicht der Baugruppe aus Figur 1;
- Figur 11 einen Querschnitt durch eine Baugruppe gemäß einer fünften Ausführungsform der Erfindung;
- Figur 12 einen Querschnitt durch eine Baugruppe gemäß einer sechsten Ausführungsform der Erfindung;
- Figur 13 einen Querschnitt durch eine erste Bauform einer Gaslanze eines Gassackmoduls für eine erfindungsgemäße Baugruppe,
- Figur 14 einen Querschnitt durch eine zweite Bauform einer Gaslanze eines Gassackmoduls für eine erfindungsgemäße Baugruppe;
- Figur 15 einen Querschnitt durch eine dritte Bauform einer Gaslanze eines Gassackmoduls für eine erfindungsgemäße Baugruppe;
- Figur 16 einen Querschnitt durch eine Baugruppe gemäß einer siebten Ausführungsform der Erfindung;
- Figur 17 einen Querschnitt durch eine Baugruppe gemäß einer achten Ausführungsform der Erfindung;
- Figur 18 einen Querschnitt durch eine Baugruppe gemäß einer neunten Ausführungsform der Erfindung;
- Figur 19 einen Querschnitt durch eine Baugruppe gemäß einer zehnten Ausführungsform der Erfindung;
- Figur 20 einen Querschnitt durch eine Baugruppe gemäß einer elften Ausführungsform der Erfindung;
- Figur 21 einen Querschnitt durch eine Baugruppe gemäß einer zwölften Ausführungsform der Erfindung;
- Figur 22 in einer schematischen, perspektivischen Ansicht eine Baugruppe gemäß einer dreizehnten Ausführungsform der Erfindung;
- Figur 23 in einer teilgeschnittenen Ansicht im Detail eine Anbringungsart eines Gasgenerators, wie sie bei der Bauform gemäß Figur 4 genutzt werden kann;
- Figur 24 in einer Schnittansicht das T-Stück, das bei Figur 23 zur Anbringung des Gasgenerators verwendet wird;
- Figur 25 eine weitere Schnittansicht des T-Stücks;
- Figur 26 eine Draufsicht des T-Stücks;
- Figur 27 in einer Schnittansicht die Anbringungsart von Figur 23;
- Figur 28 den Gasgenerator von Figur 27 in einem Schnitt entlang der Ebene A-A von Figur 27;
- Figur 29 in einer teilgeschnittenen Ansicht eine weitere Anbringungsart eines Gasgenerators;
- Figur 30 in einer schematischen Schnittansicht die Anbringungsart von Figur 29;
- Figur 31 den Gasgenerator von Figur 30 in einem Schnitt entlang der Ebene A-A von Figur 30;
- Figur 32 in einer Schnittansicht eine weitere Anbringungsart eines Gasgenerators; und
- Figur 33 in einer teilgeschnittenen Ansicht eine Baugruppe gemäß einer vierzehnten Ausführungsform der Erfindung.

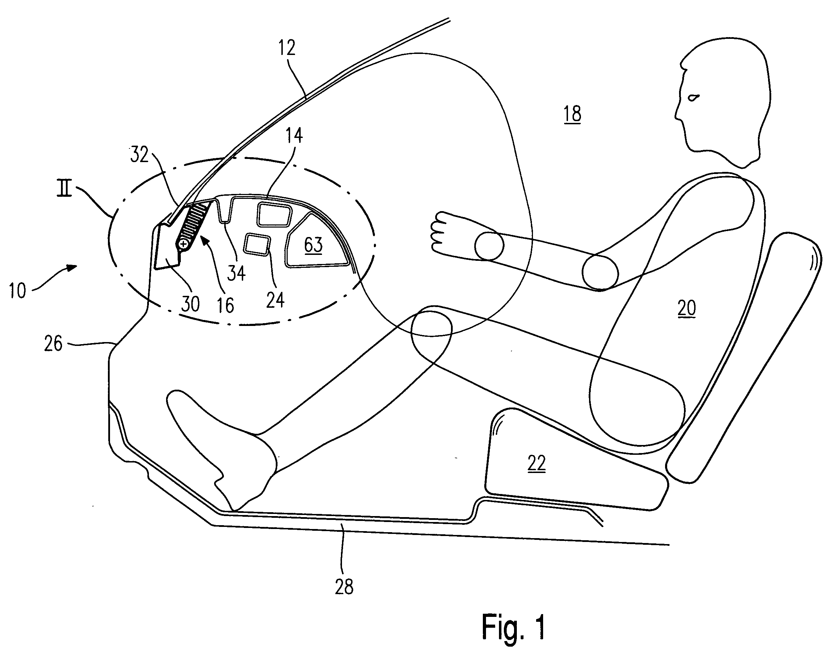

In Figur 1 ist im Querschnitt schematisch eine Baugruppe zu sehen, die aus einer Fahrzeugkarosserie 10, einer Frontscheibe 12, einer Instrumententafel 14 und einem Gassackmodul 16 besteht. Die Fahrzeugkarosserie 10 umschließt einen Fahrzeuginnenraum 18, in dem sich ein Fahrzeuginsasse 20, der in Figur 1 schematisch angedeutet ist, beispielsweise auf einem Sitz 22 sitzend aufhalten kann. Die Fahrzeugkarosserie 10 weist Rahmenteile 24, eine Spritzschutzwand 26 und einen Fahrzeugboden 28 auf. An der Fahrzeugkarosserie 10 ist ein Scheibenhalter 30 angebracht, in welchem die Frontscheibe 12 mit ihrer Unterkante 32 gelagert ist. Von dem Scheibenhalter 30 ausgehend erstreckt sich die Instrumententafel 14 in den Fahrzeuginnenraum 18, wodurch sie den Scheibenhalter 30 und den Fahrzeugrahmen 24 vor den Blicken des Fahrzeuginsassen 20 kaschiert. In der Instrumententafel 14 ist ein Lüftungskanal 34 vorgesehen, mit dessen Hilfe warme Luft zur Frontscheibe12 geleitet werden kann, um diese zu enteisen oder ein Beschlagen derselben zu verhindern.

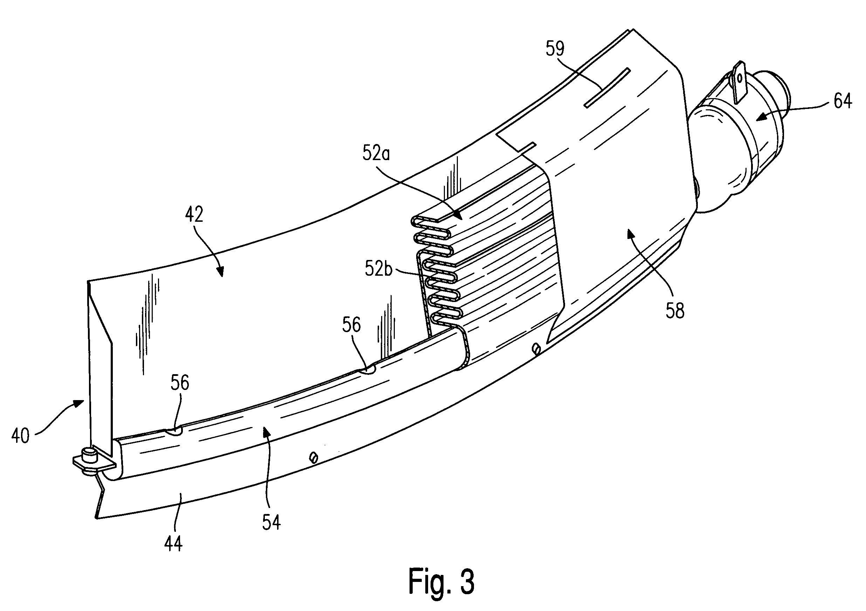

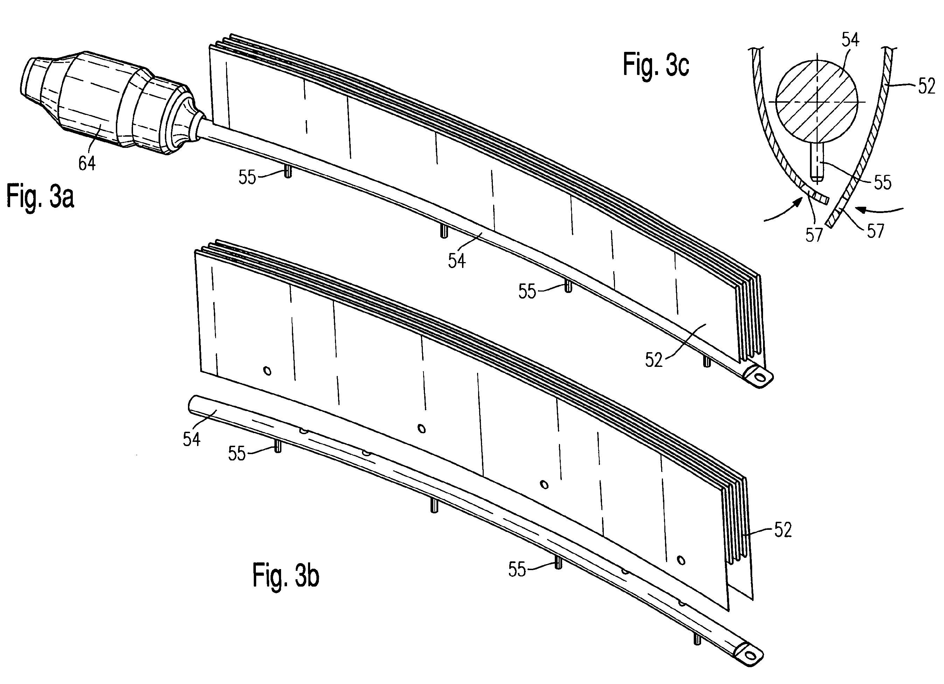

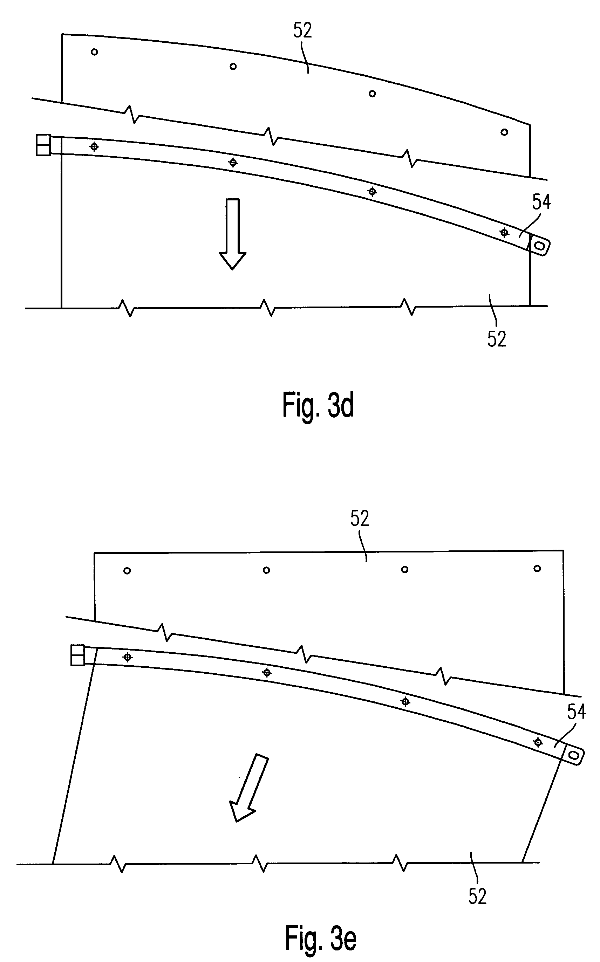

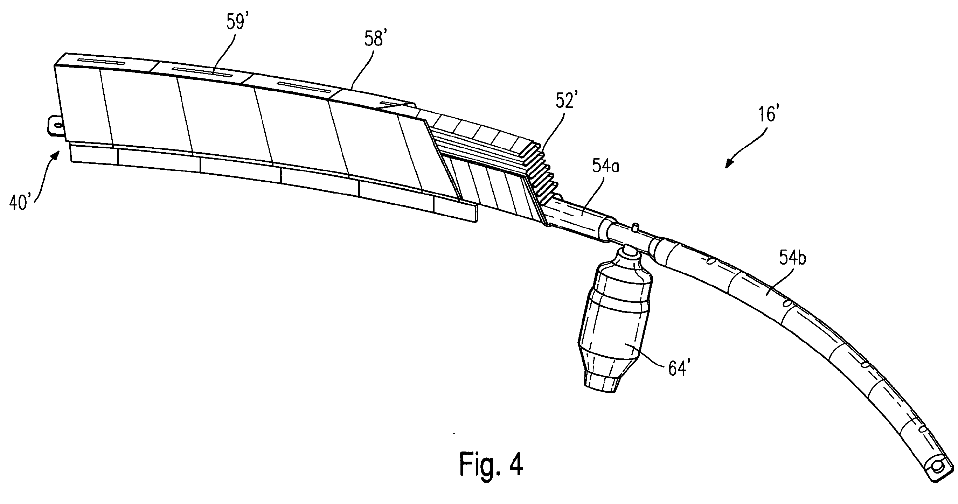

Der Scheibenhalter 30 kann beispielsweise wie in den Figuren dargestellt als Hohlprofil aus Kunststoff oder Metall ausgeführt sein. Auf seiner dem Fahrzeuginnenraum 18 abgewandten Seite ist eine Einbuchtung 36 zur Aufnahme der Unterkante 32 der Frontscheibe 12 ausgebildet. An der zum Fahrzeuginnenraum 18 weisenden Innenseite 38 des Scheibenhalters 30 ist das Gasackmodul 16 angebracht, von welchem in den Figuren 3 und 4 zwei verschieden Bauformen detaillierter dargestellt sind.

In den Figuren 3a bis 3e sind Details des Gasmoduls gemäß Figur 3 gezeigt. Die Gaslanze 54 ist mit Nasen 55 versehen, die nach unten von der Gaslanze abstehen. In die Nasen können Öffnungen 57 eingehängt werden, die am unteren Ende des Gassacks vorgesehen sind (siehe insbesondere Figur 3c). In die Nasen 55 kann auch die Schutzlage 58 eingehängt werden. Die Nasen 55 können einstückig mit der Gaslanze ausgeführt sein oder an sie angeschweißt werden.

Anhand der Figuren 3d und 3e wird kurz der Einfluß der Anbringung des Gassacks 52 an der Gaslanze auf die Entfaltungsrichtung erläutert. Wenn der Rand des Gassacks 52 entsprechend der Geometrie der Gaslanze 54 verläuft, wie dies in Figur 3d gezeigt ist, entfaltet sich der Gassack vertikal von oben nach unten in der Richtung des Pfeils. Wenn dagegen ein Gassack mit rechtwinklig verlaufenden Rändern, wie er in Figur 3e gezeigt ist, in eine schräg verlaufende, gekrümmte Gaslanze eingehängt wird, ergibt sich eine Faltungsrichtung schräg nach unten, wie durch den Pfeil angedeutet.

Das Gassackmodul 16 besitzt ein Gehäuse 40, welches im Querschnitt aus einer im wesentlichen geraden ersten Schußkanalwand 42 und einem daran anschließenden abgewinkelten Befestigungsabschnitt 44 besteht. Mit diesem Befestigungsabschnitt 44 ist das Gehäuse 40 am Scheibenhalter 30 befestigt, und zwar so, daß die erste Schußkanalwand 42 nach oben weist, also zur Instrumententafel 14. Damit bildet die Innenseite 38 des Scheibenhalters 30 eine zweite Schußkanalwand 46, wodurch die beiden Schußkanalwände 42 und 46 einen Schußkanal 48 begrenzen, dessen Ausstoßöffnung 50 zur Instrumententafel 14 weist. Der Schußkanal 48 beherbergt einen Gassack 52 und eine darin eintauchende Gaslanze 54, wobei die Gaslanze 54 mit Ausströmöffnungen 56 versehen und angrenzend an den Befestigungsabschnitt 44 am Gehäuse 40 befestigt ist (Figur 3). Der Gassack 52 ist zu einem Paket gefaltet, das aus mehreren, auf unterschiedliche Weise gefalteten Teilpaketen 52a und 52b bestehen kann. Zur einfacheren Montage und zum Schutz des Gassacks 52 kann das gefaltete Paket mit einer Schutzlage 58 abgedeckt sein, die sich beispielsweise in Form einer Folie oder einer Gewebelage zwischen den Rändern des Gehäuses 40 erstreckt und mit einer Perforation 59 versehen sein kann, um das Aufreißen der Schutzlage 58 zu erleichtern.

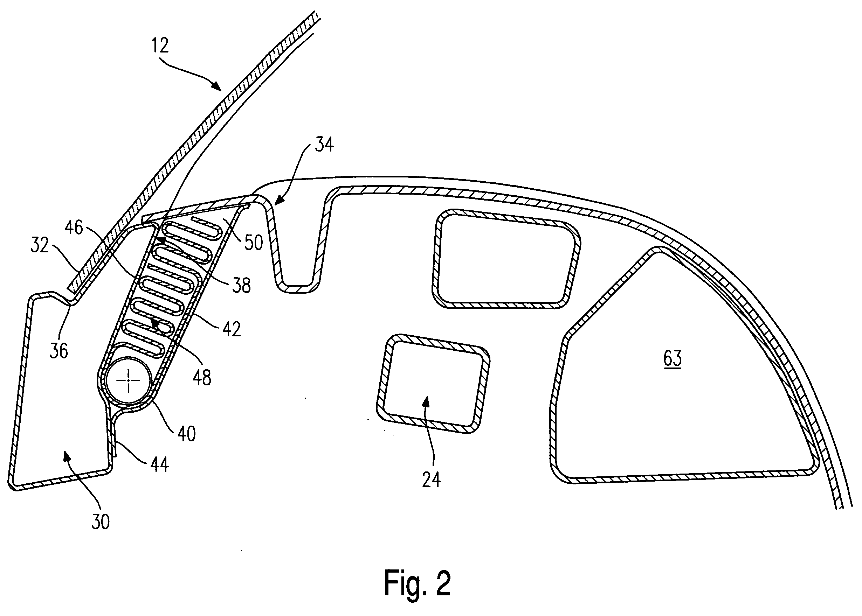

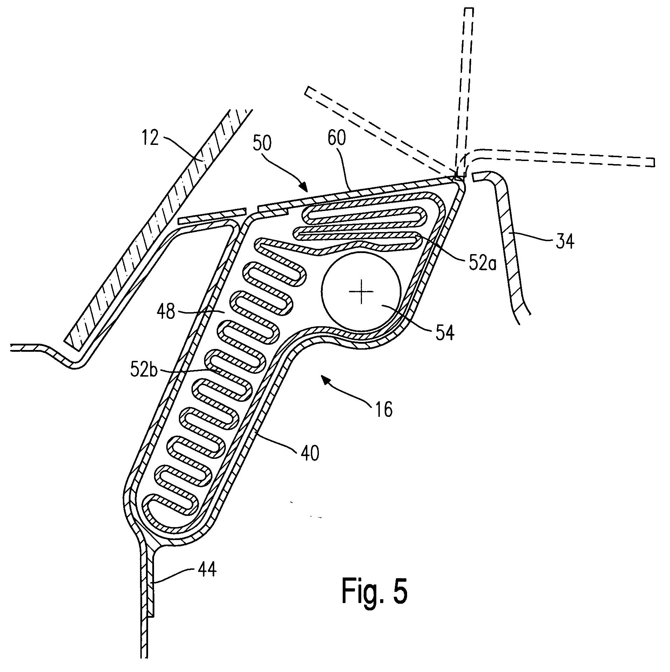

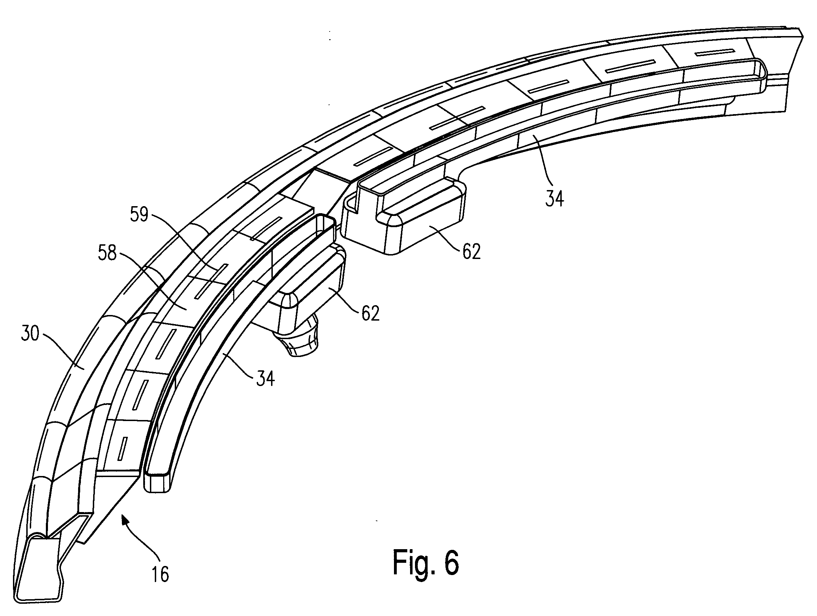

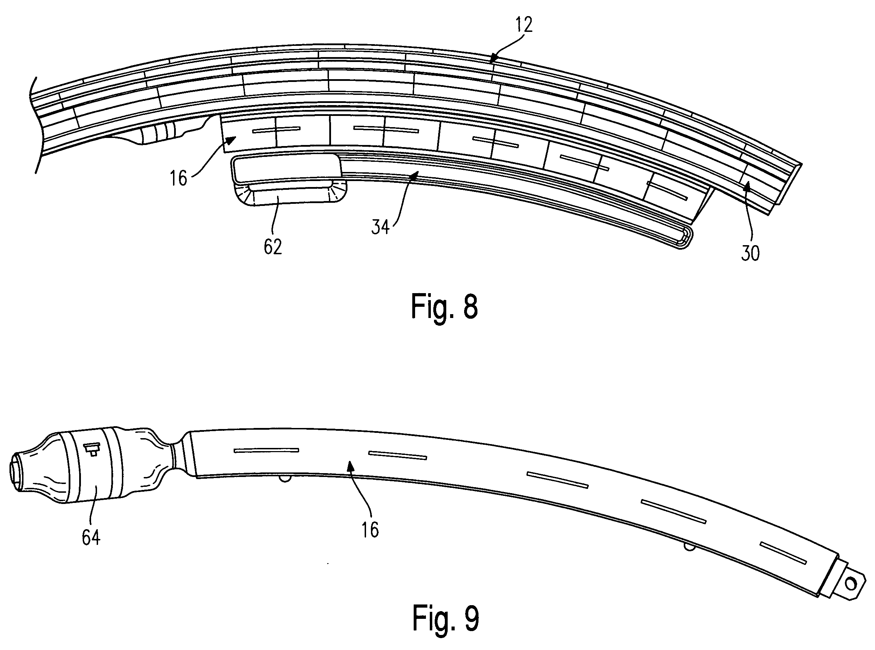

Die Instrumententafel 14 bildet im Bereich des Gassackmoduls 16 eine Abdeckung 60 für die Ausstoßöffnung 50 des Schußkanals 48 zur Frontscheibe 12. In der Abdeckung 60 kann in bekannter Weise eine Sollbruchstelle oder Reißlinie vorgesehen sein, die im Auslösefall das Aufreißen der Abdeckung 60 und das Austreten des Gassacks 52 aus dem Schußkanal 48 gestattet. Alternativ kann die Abdeckung 60 auch in das Gehäuse 40 des Gassackmoduls 16, wie in Figur 5 gezeigt, oder in den Lüftungskanal 34 integriert sein. Zum Fahrzeuginsassen 20 hin schließt sich an das Gassackmodul 16 der Lüftungskanal 34 an. Dieser Lüftungskanal 34 kann entweder, wie in den Figuren 1 und 2 dargestellt, in die Instrumententafel 14 integriert oder als separates Teil ausgebildet sein. Die zweite Alternative ist beispielhaft in den Figuren 6 bis 9 dargestellt, wo der Lüftungskanal 34 in Form einer oder zweier langgestreckter Rinnen, beispielsweise aus Kunststoff, vorgesehen ist. Die Rinnen münden jeweils an einem Ende in einen Stutzen 62, der auf einen Zufuhrkanal des Lüftungssystems aufgesteckt werden kann. Die Rinnen können von der Instrumententafel 14 abgedeckt sein, die dann in diesem Bereich beispielsweise Luftaustrittsschlitze aufweisen kann.

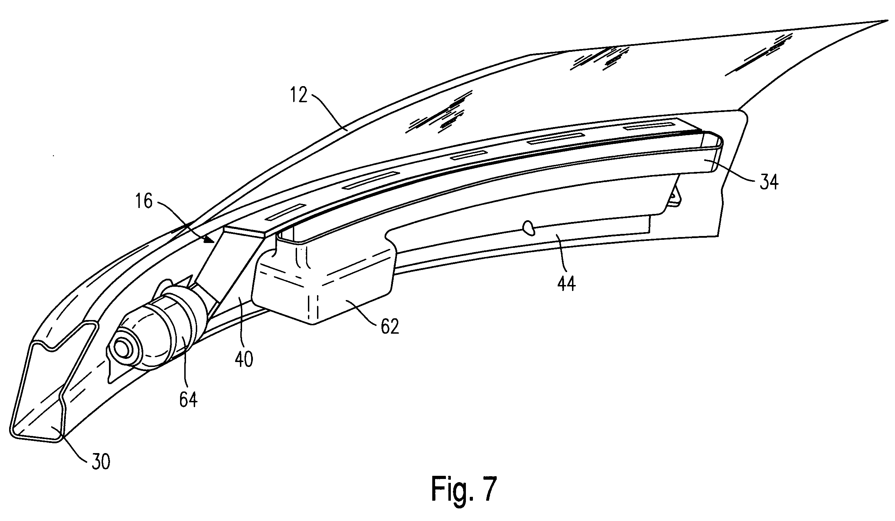

Wie in Figur 1 deutlich zu sehen ist, liegen die beweglichen Teile des Öffnungsmechanismus des Gassackmoduls 16, also die aufreißende Abdeckung 60, weit entfernt vom Interaktionsbereich des Fahrzeuginsassen 20, selbst wenn sich dieser vornüber beugt, um beispielsweise in ein Handschuhfach 63 zu greifen. Durch die langgestreckte und schmale Konstruktion des Gassackmodules 16 (Figuren 6 und 7) kann der Lüftungskanal 34 dennoch nahe genug an der Frontscheibe 12 angeordnet sein, um seine Funktion zu erfüllen.

Vorteilhafterweise ist das Gassackmodul 16 entsprechend der Form der Fahrzeugkarosserie 10 gekrümmt, wie anhand der Ausführungsformen der Figuren 3, 4, und 6 bis 9 zu sehen ist. Die Krümmung kann insbesondere dem Verlauf der Unterkante 32 der Frontscheibe 12 angepaßt werden, damit das Gassackmodul 16 möglichst dicht an der Frontscheibe 12 bzw. am Scheibenhalter 30 verlaufen kann. Außerdem kann das Gassackmodul 16 durch die Krümmung vorteilhaft an das Design der Instrumententafel 14 angepaßt sein.

Die Gaslanze 54 ist mit einem Gasgenerator 64 (Figur 3) verbunden, von dem sie mit Druckgas gespeist werden kann, um den Gassack 52 aufzublasen. In einer anderen Bauform eines Gassackmodules 16' (Figur 4) sind für Fahrer und Beifahrerseite jeweils getrennte Gassäcke 52' und Gaslanzen 54a und 54b vorgesehen, die beide an denselben Gasgenerator 64' angeschlossen sind.

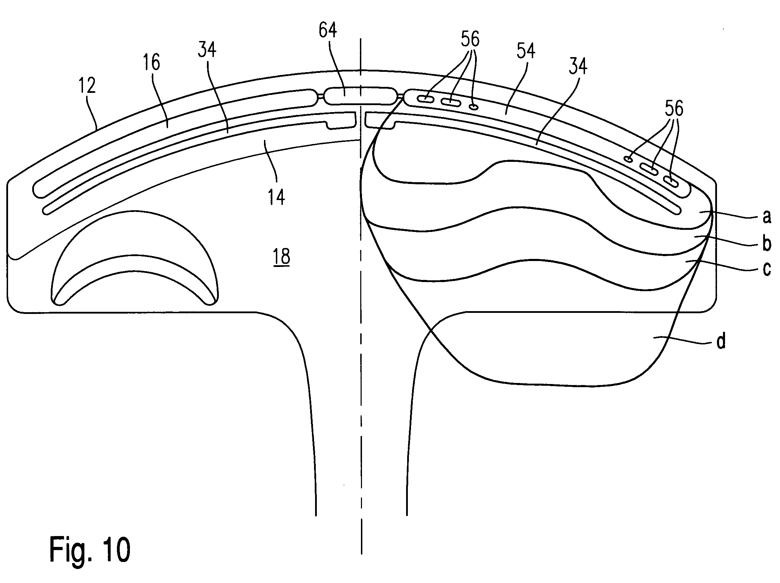

Die gezielte Ausbreitung des Gassackes 52 kann weiterhin durch Form und Anordnung der Ausströmöffnungen 56 in der Gaslanze 54, wie in den Figuren 10 und 13 bis 15 dargestellt, beeinflußt werden. Zum einen kann durch die Anordnung der Ausströmöffnungen 56 an den Enden der Gaslanze 54 bzw. dadurch, daß die Querschnitte der Ausströmöffnungen 56 in diesen Bereichen größer ausgeführt sind als in der Mitte, erreicht werden, daß sich der Gassack 52 in den Seitenbereichen schneller ausbreitet. Dies ist in Figur 10 durch die verschiedenen Ausbreitungsphasen a bis d des Gassackes 52 angedeutet. Eine derartige Ausbreitung des Gassackes 52 ist besonders dann vorteilhaft, wenn sich der Fahrzeuginsasse 20 nicht in einer optimalen Sitzposition befindet.

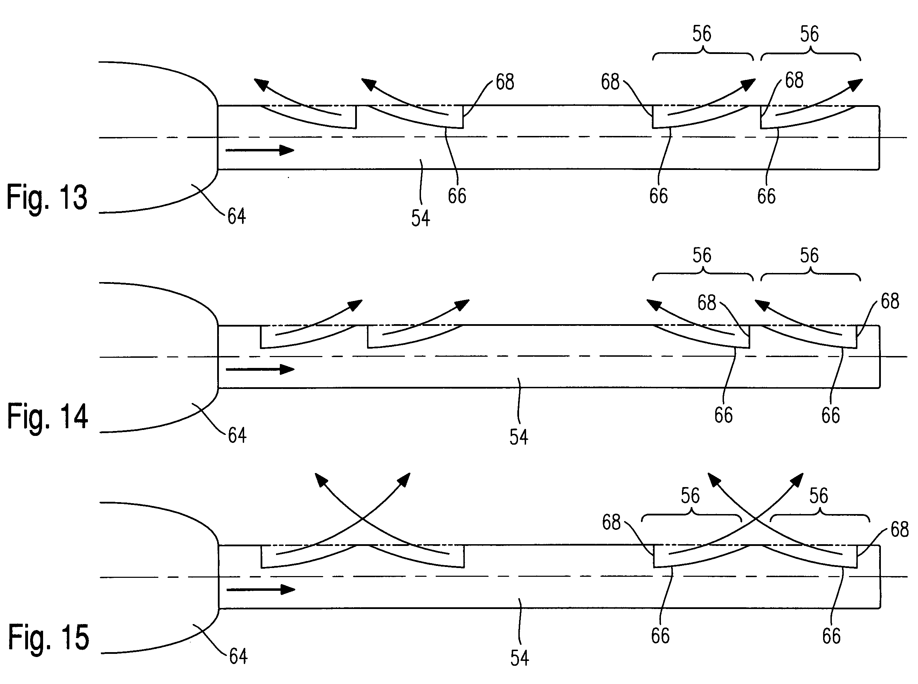

Zum anderen können die Ausströmöffnungen 56 in der Gaslanze 54 in vorteilhafter Weise in Form kiemenartiger Einbuchtungen 66 ausgebildet sein. In den Figuren 13 bis 15 sind derartige Ausströmöffnungen 56 dargestellt. Sie bestehen aus in die Gaslanze eingedrückten Einbuchtungen 66, von denen ein in Längsrichtung liegendes Ende eingestanzt ist und somit eine Öffnung 68 zum Rohrinnern bildet. Durch die kiemenartigen Einbuchtungen 66 wird die Ausströmrichtung des Gases aus der Gaslanze 54 im wesentlichen vorgegeben, wie es in den Figuren 13 bis 15 durch die Pfeile angedeutet ist. Damit kann das ausströmende Gas zu den Enden (Figur 13) oder zur Mitte (Figur14 der Gaslanze 54 gelenkt oder an den Ausströmöffnungen 56 verwirbelt werden (Figur 15).

Alle bisher beschriebenen Ausführungsformen führen zu einer von Anfang an großflächige Ausbreitungsfront des Gassackes 52. Dies bewirkt in Verbindung mit der maximalen Entfernung zum Fahrzeuginsassen, daß die Energie des Gassackes 52 bei der Entfaltung besonders im Zentralbereich des Gassackes 52 verringert ist und somit die Belastung eines Fahrzeuginsassen 20, der sich nicht in einer optimalen Sitzposition befindet, reduziert ist.

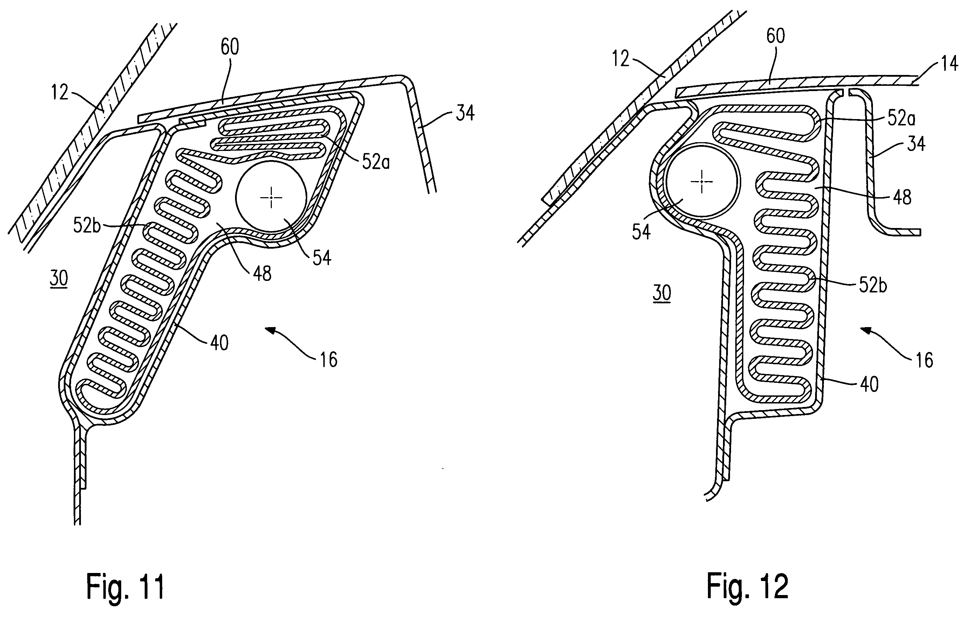

Eine weitere Möglichkeit zur Steuerung der Gassackentfaltung besteht in der Anordnung der Gaslanze 54 im Gassackmodul 16, wie es beispielhaft in den Figuren 11 und 12 dargestellt ist.

In Figur 11 ist die Gaslanze 54 nicht unterhalb des gesamten Gassackpakets 52 angeordnet, sondern von dem wenige Lagen umfassenden oberen Teilpaket 52a bedeckt und seitlich des unteren Teilpaketes 52b, und zwar auf der zum Fahrzeuginnenraum 18 weisenden Seite. Durch diese Anordnung wird erreicht, daß bei der Auslösung des Gassackmoduls 16 zunächst die wenigen Lagen des oberen Teilpakets 52a in Richtung der Frontscheibe 12 ausgestoßen und danach die restlichen Lagen des unteren Teilpaketes 52b durch den sich entfaltenden Gassack 52 nachgezogen werden, wobei sich der Gassack 52 in vorteilhafter Weise entlang der Frontscheibe 12 entfalten kann.

In Figur 12 ist die Gaslanze ähnlich angeordnet, jedoch auf der zur Fahrzeugaußenseite weisenden Seite des gefalteten unteren Teilpaketes 52b, so daß die Entfaltung des Gassacks 52 im Vergleich zur Ausführungsform nach Figur 11 eher entlang der Instrumententafel 14 stattfindet.

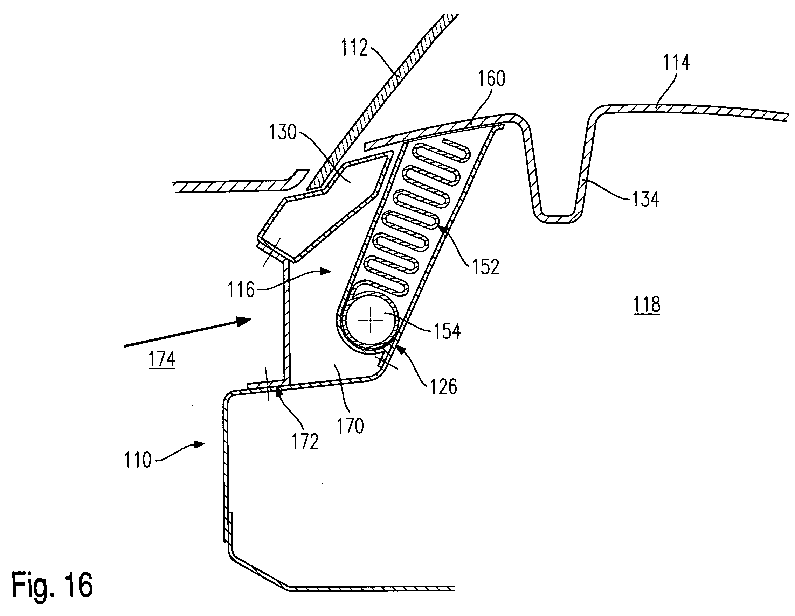

Eine weitere Ausführungsform einer erfindungsgemäßen Baugruppe zeigt Figur 16, in der für bereits bekannte Bauteile um 100 erhöhte Bezugszeichen Verwendung finden. In dieser Ausführungsform reicht die Spritzschutzwand 126 in den Fahrzeuginnenraum 118 bis zur Instrumententafel 114. Zwischen Scheibenhalter 130 und Spritzschutzwand 126 befindet sich ein Zwischenraum 170, der das Gassackmodul 116 aufnimmt. Das Gassackmodul 116 ist nicht wie in den vorangegangenen Ausführungsformen am Scheibenhalter 130, sondern an der Spritzschutzwand 126 befestigt, und zwar auf der dem Fahrzeuginnenraum 118 abgewandten Seite, während sich der Lüftungskanal 134 auf der anderen Seite der Spritzschutzwand 126 befindet. Der Zwischenraum 170 ist durch eine Feuchtigkeitsschutzwand 172, die an der Spritzschutzwand 126 und am Scheibenhalter 130 befestigt ist, gegen den Motorraum 174 hin abgeschlossen.

Diese Ausführungsform bietet den Vorteil, daß das Gassackmodul 116 vom Motorraum 174 her montiert werden kann. Diese Montagemöglichkeit ist besonders im Hinblick auf die üblicherweise sehr sperrigen kombinierten Fahrerund Beifahrer-Module (Figur 4) vorteilhaft.

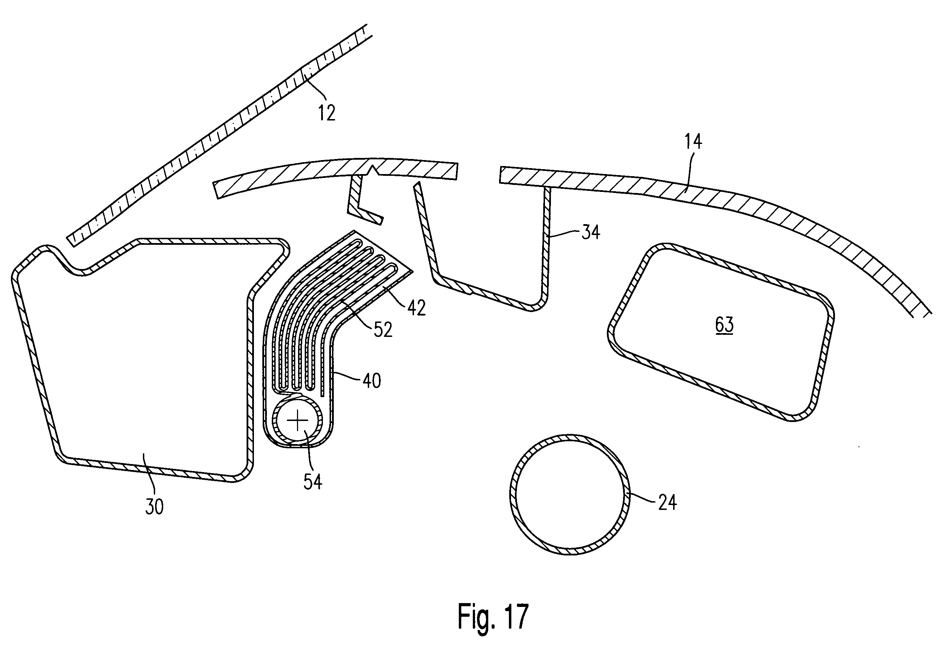

In Figur 17 ist eine Baugruppe gemäß einer achten Ausführungsform der Erfindung gezeigt. Im Unterschied zu den vorangegangenen Ausführungsformen ist das Gehäuse abgekröpft ausgerührt; der Schußkanal 42 erstreckt sich in einer anderen Richtung als der Teil des Gehäuses 40, in welchem die Gaslanze 54 angeordnet ist. Der Schußkanal 42 ist dabei so ausgerichtet, daß er parallel zur Windschutzscheibe 12 verläuft. Dies führt zu einer geringeren Belastung der Windschutzscheibe, wenn der Gassack das Gehäuse 40 verläßt. Außerdem ergibt sich mehr Platz für den Scheibenhalter 30.

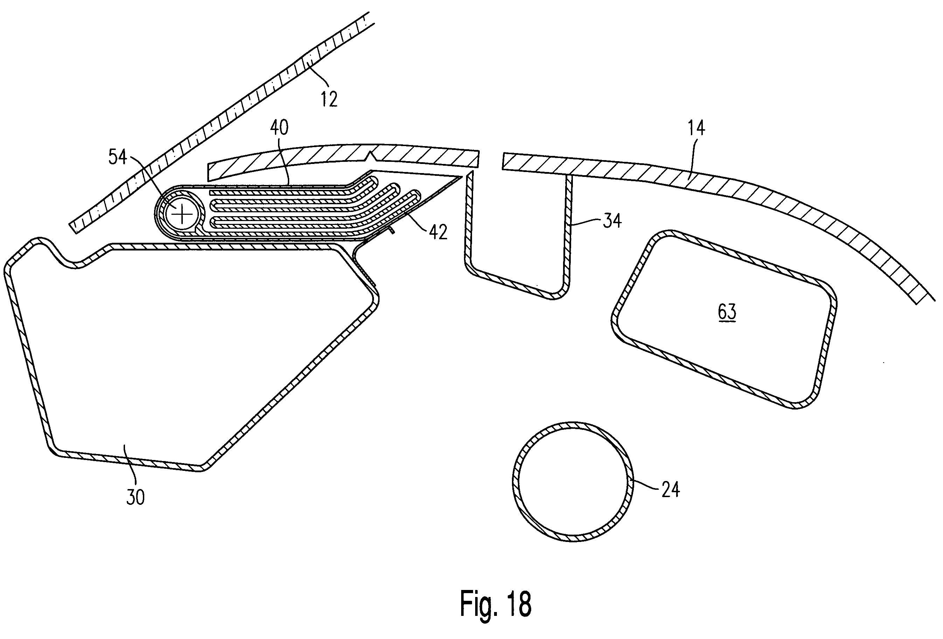

In Figur 18 ist eine Baugruppe gemäß einer neunten Ausführungsform gezeigt. Ähnlich wie bei der achten Ausführungsform ist das Gehäuse abgekröpft ausgerührt, so daß sich der Schußkanal 42 parallel zur Windschutzscheibe 12 erstreckt. Im Unterschied zur achten Ausführungsform ist das Gehäuse 40 mit dem Bereich, in welchem die Gaslanze 54 angeordnet ist, waagrecht liegend auf dem Scheibenhalter 30 angeordnet. Dies ist besonders platzsparend. Bei Aktivierung des Gassacks tritt dieser aus einer Klappe der Instrumententafel 14 aus, die zwischen der Windschutzscheibe 12 und dem Lüftungskanal 34 angeordnet ist.

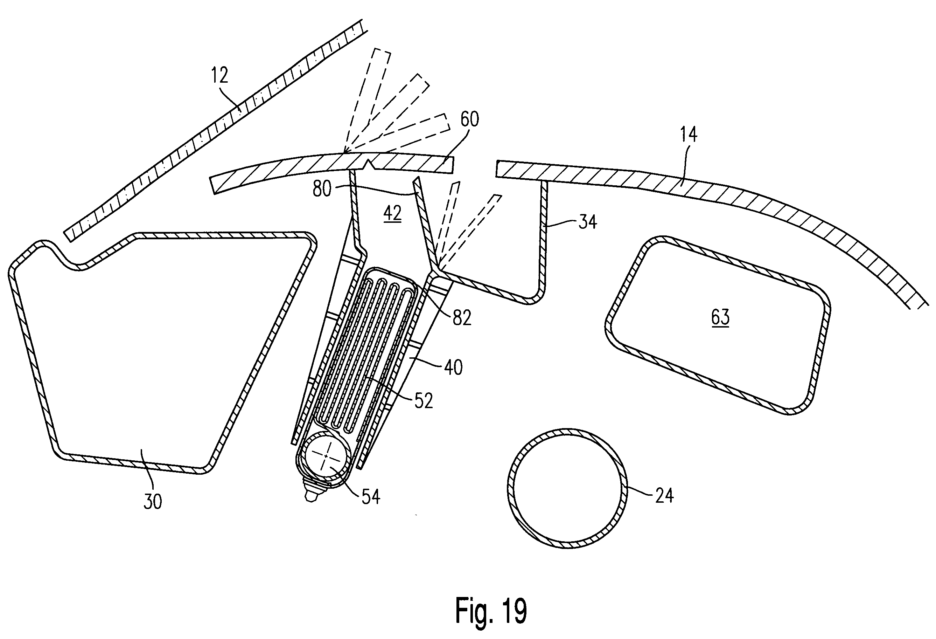

In Figur 19 ist eine Baugruppe gemäß einer zehnten Ausführungsform gezeigt. Bei dieser Ausführungsform ist das Gehäuse 40 einstückig mit dem Lüftungskanal 34 ausgeführt, und zwar hängend unterhalb von diesem in der Nähe des Scheibenhalters 30. Der Schußkanal 42 ist hier unterhalb der Abdeckung 60 ausgebildet, wobei zur Abgrenzung des Lüftungskanals 34 eine Trennklappe 80 vorgesehen ist. Diese ist so elastisch, daß sie beim Entfalten des Gassacks geringfügig nachgibt, so daß sich der Schußkanal erweitert. Auf diese Weise kann zum Austritt des Gassacks auch die Austrittsöffnung des Lüftungskanals 34 verwendet werden.

Das Gehäuse 40 des Gassacks kann einstückig mit dem Lüftungskanal 34 ausgebildet werden, wobei außenliegende Verstärkungsrippen vorgesehen sind. Der Gassack kann im Gehäuse 40 in einfacher Weise von einer Gewebeabdeckung 82 umschlossen sein.

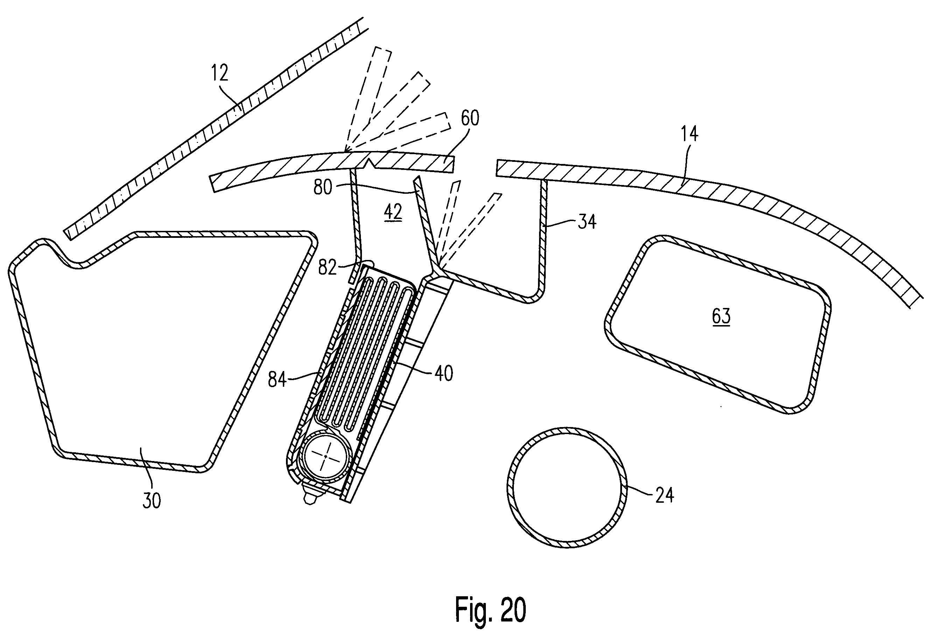

In Figur 20 ist eine Baugruppe gemäß einer elften Ausführungsform der Erfindung gezeigt. Im Unterschied zur zehnten Ausführungsform ist das Gehäuse 40 in Komposit-Bauweise ausgeführt. Ein Teil des Gehäuses ist einstückig mit dem Lüftungskanal 34 ausgeführt, während an der dem Scheibenhalter 30 zugewandten Seite eine Metallschale 84 aus Stahlblech oder Aluminium vorgesehen ist.

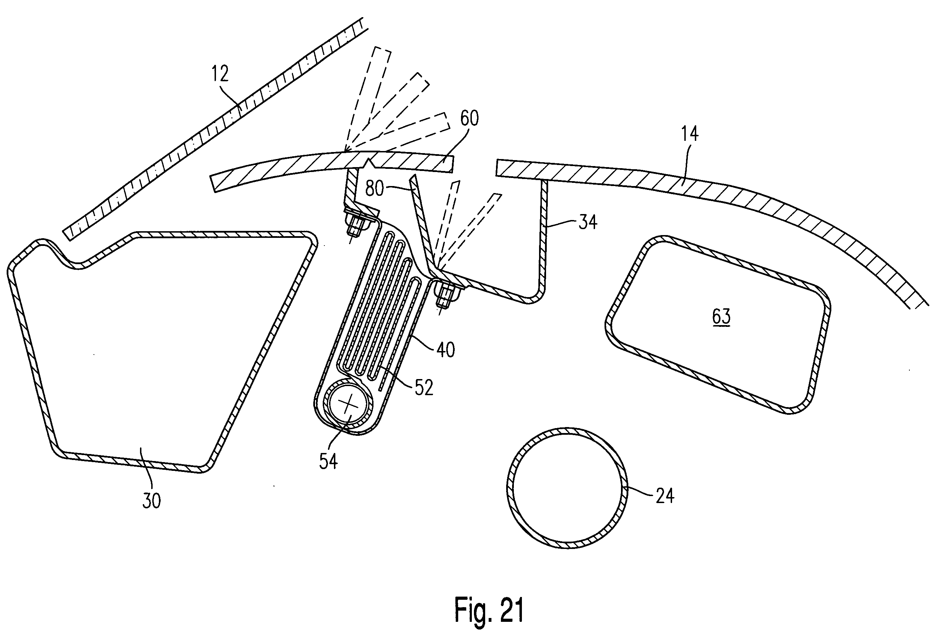

In Figur 21 ist eine Baugruppe gemäß einer zwölften Ausführungsform gezeigt. Im Unterschied zur zehnten Ausführungsform ist hier das Gehäuse 40 als vom Lüftungskanal 34 getrenntes Bauteil ausgeführt, das aus Kunststoff, Stahl oder Aluminium bestehen kann und mit dem Lüftungskanal 34 verschraubt ist.

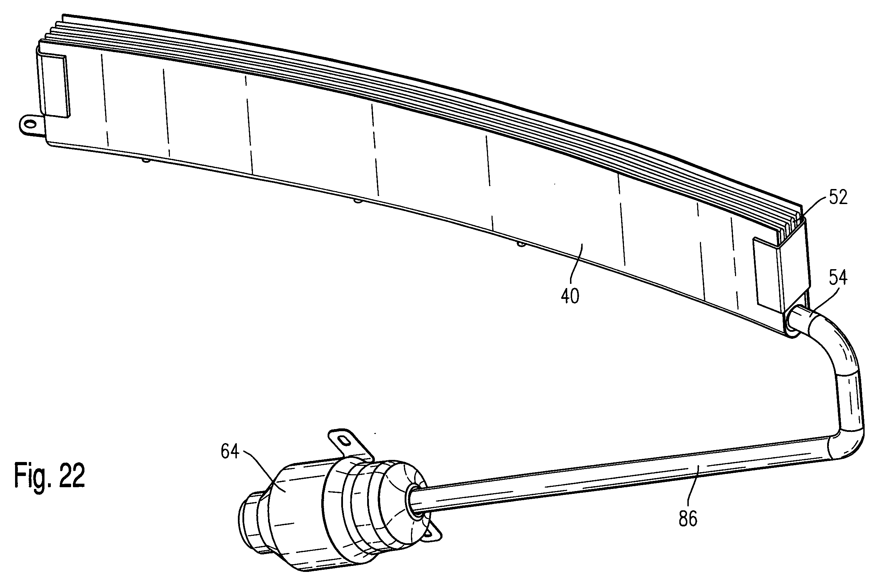

In Figur 22 ist eine Baugruppe gemäß einer dreizehnten Ausrührungsform gezeigt. Der Unterschied zu der beispielsweise in Figur 3 gezeigten Ausführungsform besteht darin, daß sich an die Gaslanze 54 ein Übergangsrohr 86 anschließt, das die Gaslanze 54 mit dem Gasgenerator 64 verbindet. Das Übergangsrohr ermöglicht es, den Gasgenerator 64 flexibel und in einem großen Abstand vom Gassackmodul im Fahrzeug an einem geeigneten Ort anzuordnen.

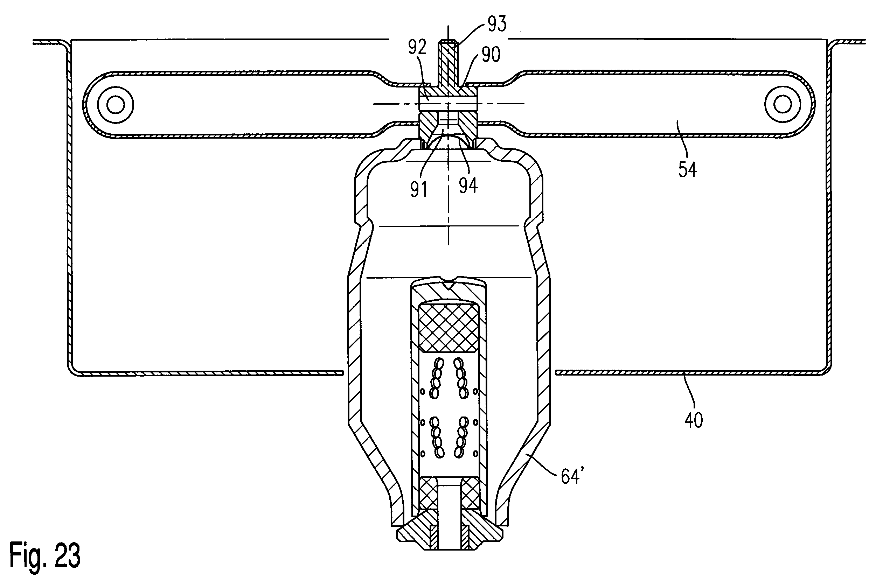

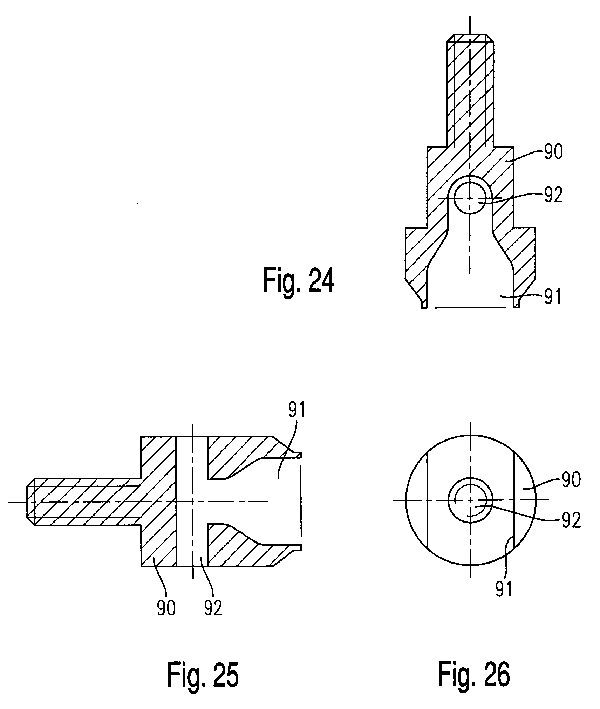

In den Figuren 23 bis 26 ist eine Anbringungsmöglichkeit für einen Gasgenerator 64' gezeigt, wie er in Figur 4 gezeigt ist. Der Gasgenerator 64 ist an ein T-Stück 90 angeschlossen, das eine Eingangsöffnung 91 und eine quer dazu verlaufende Ausgangsbohrung 92 aufweist. An der von der Eingangsöffnung 91 abgewandten Seite ist ein Gewindestift 93 vorgesehen, der zur Befestigung dienen kann.

Die Eingangsöffnung 91 des T-Stücks 90 ist so ausgebildet, das sie eine Berstmembran 94 des Gasgenerators 64' halten kann. In diesem Bereich ist auch das T-Stück in den Gasgenerator 64' eingesetzt, beispielsweise durch Umbördeln.

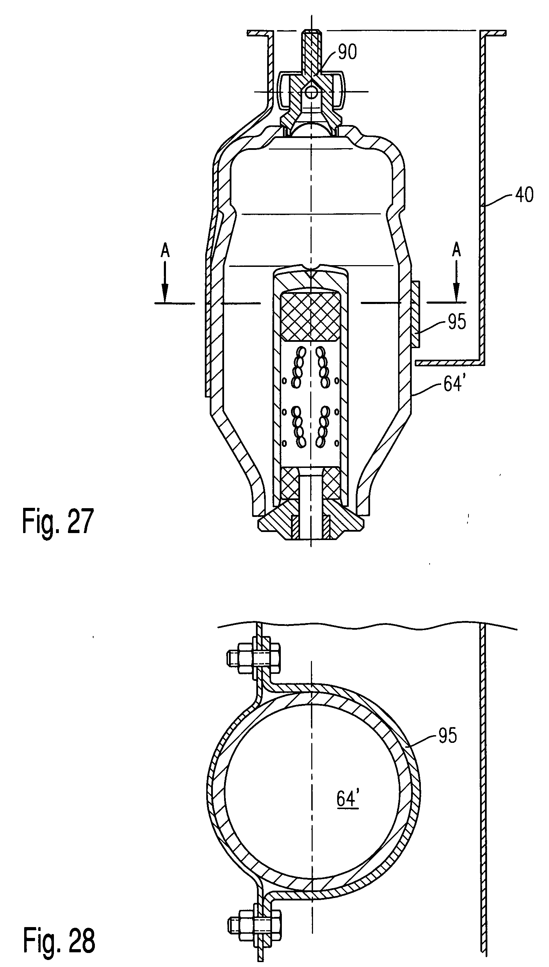

Wie insbesondere in den Figuren 27 und 28 zu sehen ist, ist der Gasgenerator 64' durch eine Öffnung von unten in das Gehäuse 40 eingeschoben und dort mittels einer Rohrschelle 95 befestigt. Die Gaslanze 54 erstreckt sich entlang dem oberen Rand des Gehäuses (siehe auch Figur 23). Die Anbringung des Gehäuses muß für keine besonders hohen Kräfte ausgelegt werden, da der Gasgenerator aufgrund des T-Stücks schubneutral angebracht ist.

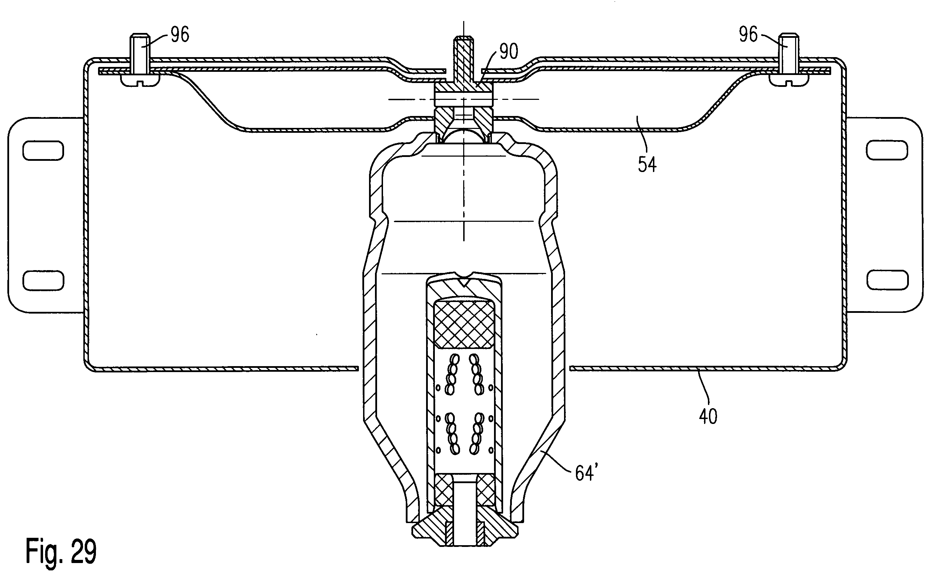

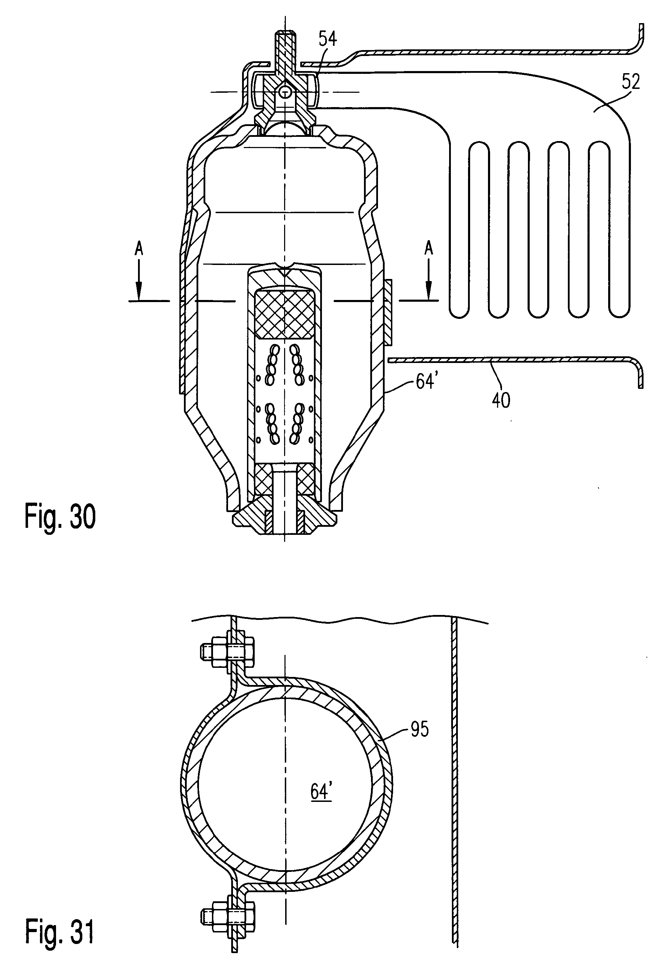

In den Figuren 29 bis 31 ist eine Variante gezeigt, bei welcher der Gassack vor dem Gasgenerator 64 angeordnet ist (siehe insbesondere Figur 30). Die Gaslanze 54 ist zu diesem Zweck mit Ausströmöffnungen versehen, die das Gas parallel zur oberen Wand des Gehäuses 40 austreten lassen (in Figur 30 waagrecht nach rechts). Die Gaslanze kann durch Schrauben 96 in gleicher Weise wie das T-Stück 90 durch die Oberseite des Gehäuses 40 hindurch verschraubt werden.

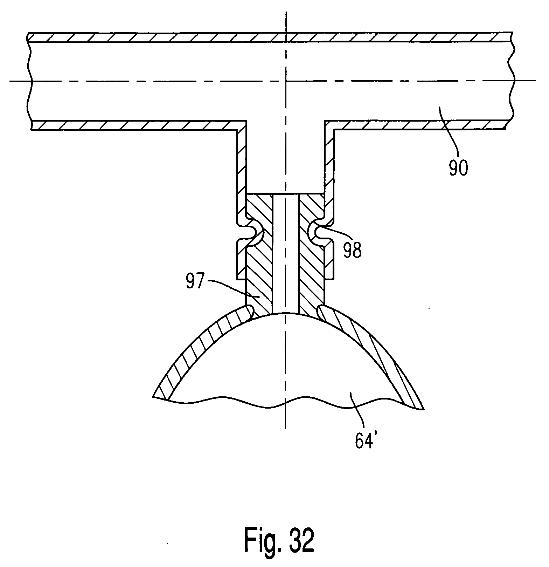

In Figur 32 ist eine weitere Variante gezeigt. Hier wird das T-Stück 90 mit einem Membranhalter 97 des Gasgenerators 64' vercrimpt. Zu diesem Zweck ist der Membranhalter 97 mit einer Nut 98 versehen, in die das Material des T-Stücks 90 hineingedrückt wird.

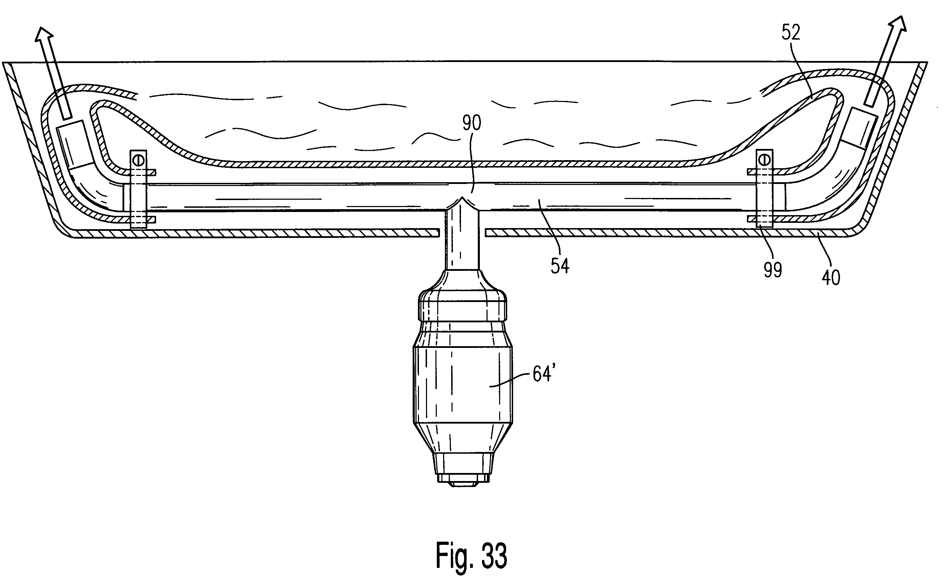

In Figur 33 ist eine Baugruppe gemäß einer vierzehnten Ausführungsform gezeigt. Bei dieser Ausführungsform ist der Gasgenerator 64' außerhalb des Gehäuses 40 angeordnet, und die Gaslanze 54 erstreckt sich symmetrisch beiderseits des T-Stücks 90 entlang dem unteren Rand des Gehäuses 40. Die Gaslanze 54 ist an beiden Enden schräg nach oben abgebogen. Über diese Enden ist der Gassack 52 gestülpt und mit einer Schelle 99 befestigt. Bei der Aktivierung des Gasgenerators 64' beginnt sich der Gassack zuerst an den Enden der Gaslanze 54 zu entfalten, und zwar in der durch die Pfeile angedeuteten Richtung. Das Entfalten schreitet dann zur Mitte hin fort.

## Patentansprüche

1. Baugruppe bestehend aus einer Fahrzeugkarosserie (10; 110), einer Frontscheibe (12; 112), einer Instrumententafel (14; 114) mit einem Lüftungskanal (34; 134) zum Belüften der Frontscheibe und einem Gassackmodul (16; 16'; 116), **dadurch gekennzeichnet, daß** das Gassackmodul (16; 16'; 116) zwischen der Frontscheibe (12; 112) und dem Lüftungskanal (34; 134) angeordnet ist.

2. Baugruppe nach Anspruch 1, **dadurch gekennzeichnet, daß** das Gassackmodul (16; 16'; 116) einen Gassack (52; 52'; 152) aufweist, der zu einem Gassackpaket gefaltet ist, und daß ein Schußkanal (48; 148) zum Ausstoßen des Gassackes vorgesehen ist, der in eine Ausstoßöffnung (50) mündet, durch die der Gassack ausgestoßen werden kann.

3. Baugruppe nach Anspruch 2, **dadurch gekennzeichnet, daß** das Gassackmodul (16; 16'; 116) ein Gehäuse (40; 40'; 140) aufweist und der Schußkanal (48; 148) begrenzt ist von einer ersten Schußkanalwand (42; 142), die von dem Gehäuse gebildet ist, und von einer zweiten Schußkanalwand (46; 146), die von der Fahrzeugkarosserie (10; 110) gebildet ist.

4. Baugruppe nach Anspruch 3, **dadurch gekennzeichnet, daß** die Fahrzeugkarosserie (10) einen Scheibenhalter (30) für die Frontscheibe (12) aufweist, wobei die zweite Schußkanalwand (46) von dem Scheibenhalter (30) gebildet ist.

5. Baugruppe nach Anspruch 3, **dadurch gekennzeichnet, daß** die Fahrzeugkarosserie (110) eine Spritzschutzwand (126) aufweist, wobei die zweite Schußkanalwand (146) von der Spritzschutzwand (126) gebildet ist.

6. Baugruppe nach einem der Ansprüche 2 bis 5, **dadurch gekennzeichnet, daß** das Gassackmodul eine Gaslanze (54; 54a, 54b; 154) aufweist, durch die Gas in den Gassack (52; 52'; 152) geleitet werden kann.

7. Baugruppe nach Anspruch 6, **dadurch gekennzeichnet, daß** die Gaslanze (54) mit kiemenartigen Ausströmöffnungen (56) versehen ist.

8. Baugruppe nach Anspruch 7, **dadurch gekennzeichnet, daß** die kiemenartigen Ausströmöffnungen (56) so ausgerichtet sind, daß das aus der Gaslanze (54) ausströmende Gas zu den Enden der Gaslanze (54) hin strömt.

9. Baugruppe nach Anspruch 7, **dadurch gekennzeichnet, daß** die kiemenartigen Ausströmöffnungen (56) so ausgerichtet sind, daß das aus der Gaslanze (54) ausströmende Gas zur Mitte der Gaslanze (54) hin strömt.

10. Baugruppe nach Anspruch 7, **dadurch gekennzeichnet, daß** die kiemenartigen Ausströmöffnungen (56) so ausgerichtet sind, daß das aus der Gaslanze (54) ausströmende Gas verwirbelt wird.

11. Baugruppe nach Anspruch 6, **dadurch gekennzeichnet, daß** die Gaslanze (54) zwischen dem Gassackpaket und dem Lüftungskanal (34) angeordnet ist.

12. Baugruppe nach Anspruch 6, **dadurch gekennzeichnet, daß** die Gaslanze (54) zwischen dem Gassackpaket und der Frontscheibe (12) angeordnet ist.

13. Baugruppe nach einem der Ansprüche 6 bis 12 , **dadurch gekennzeichnet, daß** das Gassackpaket zwei Teilpakete umfaßt, von denen das erste Teilpaket (52a) auf eine erste Art gefaltet ist und näher zur Ausstoßöffnung (50) angeordnet ist, während das zweite Teilpaket (52b) auf eine zweite Art gefaltet ist und ferner zur Ausstoßöffnung angeordnet ist.

14. Baugruppe nach Anspruch 13, **dadurch gekennzeichnet, daß** das erste Teilpaket (52a) zwischen der Ausstoßöffnung und der Gaslanze (54) angeordnet ist.

15. Baugruppe nach einem der Ansprüche 2 bis 14, **dadurch gekennzeichnet, daß** der Schußkanal (48) gegenüber dem Rest des Gehäuses (40) abgekröpft ist, so daß er parallel zur Windschutzscheibe (12) verläuft.

16. Baugruppe nach einem der vorhergehenden Ansprüche, **dadurch gekennzeichnet, daß** das Gassackmodul (16) für Fahrer- und Beifahrerseite getrennte Gasgeneratoren (64) aufweist.

17. Baugruppe nach einem der Ansprüche 1 bis 15, **dadurch gekennzeichnet, daß** das Gassackmodul (16') für Fahrer- und Beifahrerseite einen gemeinsamen Gasgenerator (64') aufweist.

18. Baugruppe nach einem der vorhergehenden Ansprüche, **dadurch gekennzeichnet, daß** das Gehäuse (40) am Lüftungskanal (34) angeordnet ist.

19. Baugruppe nach Anspruch 18, **dadurch gekennzeichnet, daß** das Gehäuse (40) einstückig mit dem Lüftungskanal (34) ausgebildet ist.

20. Baugruppe nach Anspruch 18, **dadurch gekennzeichnet, daß** das Gehäuse (40) an den Lüftungskanal (34) angeschraubt ist.

21. Baugruppe nach einem der vorhergehenden Ansprüche, **dadurch gekennzeichnet, daß** zwischen der Gaslanze (54) und dem Gasgenerator (64) ein Übergangsrohr (86) angeordnet ist.

22. Baugruppe nach einem der vorhergehenden Ansprüche, **dadurch gekennzeichnet, daß** die Gaslanze (54) mit Nasen (55) versehen ist, in die der Gassack (52) eingehängt ist.

23. Baugruppe nach einem der vorhergehenden Ansprüche, **dadurch gekennzeichnet, daß** ein T-Stück 90 am Gasgenerator (64; 64') angeordnet ist, das gleichzeitig als Halter für eine Berstmembran (94) dient.

24. Baugruppe nach einem der vorhergehenden Ansprüche, **dadurch gekennzeichnet, daß** ein T-Stück (90) vorgesehen ist, das mit dem Gasgenerator (64; 64') vercrimpt ist.
